# EUROPÄISCHE PATENTSCHRIFT

(11) **EP 4 492 090 B1**
(45) Veröffentlichungstag und Bekanntmachung des Hinweises auf die Patenterteilung: **26.08.2026**
(21) Anmeldenummer: 24179918.8
(22) Anmeldetag: 04.06.2024
(51) Int. Cl.: G01S 13/87, G01S 13/931, G01S 13/58, G01S 7/03

(54) **RADARSENSOR**
RADAR SENSOR
CAPTEUR RADAR

(30) Priorität: 11.07.2023 DE 102023118328
(43) Veröffentlichungstag der Anmeldung: 15.01.2025
(73) Patentinhaber: SICK AG, 79183 Waldkirch (DE)
(72) Erfinder: Kronauge, Dr. Matthias, 22761 Hamburg (DE); Schwarzkopf, Sebastian, 22949 Ammersbek (DE)

(56) Entgegenhaltungen:
- DE-A1- 102015 218 542
- DE-A1- 102021 207 201
- US-A1- 2016 018 511
- ANONYMOUS: "IWR6843AOP Single-Chip 60-to 64-GHz mmWave Sensor Antennas-On-Package (AOP)", TEXAS INSTRUMENTS, 1 January 2022 (2022-01-01), pages 1 - 81, XP093178027, Retrieved from the Internet <URL:https://www.ti.com/lit/gpn/iwr6843aop>

## Beschreibung

Die vorliegende Erfindung betrifft einen Radarsensor gemäß dem Oberbegriff von Anspruch 1.

Die vorliegende Erfindung betrifft einen Radarsensor mit einer hohen Winkelauflösung.

Mit Radarsensoren können Objekte in einem Erfassungsbereich detektiert werden und deren relative Position in Entfernung und Winkel zum Sensor gemessen werden. Beispielsweise kann auch eine Radialgeschwindigkeit gemessen werden
Zur Messung der relativen Position und Winkel werden vom Radarsensor elektromagnetische Signale ausgesendet und deren Reflektionen an Objekten, also Echos wieder empfangen und ausgewertet.

Zur Winkelmessung werden mehrere räumlich verteilte Sende- und Empfangsantennen verwendet und die Phasenlage des empfangenen Echosignals an den räumlich verteilten Antennen verglichen, um so auf den Winkel zu schließen. Je mehr Sende- und Empfangsantennen verwendet werden, desto besser die Winkelauflösung.

Drei wichtige Grundbegriffe beziehungsweise Abkürzungen, die aus dem Bereich bekannt und wichtig sind, werden hier der Vollständigkeit halber erläutert.

Single Input Multiple Output (SIMO) werden Systeme mit einer einzigen Sendeantenne (Input) und mehreren Empfangsantennen (Output) genannt.

Multiple Input Single Output (MISO) werden Systeme mit mehreren Sendeantennen und einer einzigen Empfangsantenne genannt.

Multiple Input Multiple Output (MIMO) werden Systeme mit mehreren Sendeantennen und mehreren Empfangsantennen genannt.

Grundsätzlich ist es möglich eine Sendeantenne und mehrere Empfangsantennen oder umgekehrt eine Empfangsantenne und mehrere Sendeantennen zu benutzen, das Ergebnis ist inhaltlich dasselbe. Die verschiedenen Anordnungen unterscheiden sich ggf. in den Kosten für die Hardware auf Sende- und Empfangsseite.

Wenn mehr Antennen benötigt werden als mit einem Radartransceiver verfügbar sind gibt es die Möglichkeit mehrere Radartransceiverchips anzuordnen. Dann kann jede Sendeantenne jedes Radartransceiverchips mit jeder Empfangsantenne jedes Radartransceiverchips kombiniert werden. Bei einem Beispiel eines Radartransceiverchips mit 3 Sende- und 4 Empfangsantennen ausgehend hätte man bei z. B zwei Radartransceiverchips sechs Sendeantennen und acht Empfangsantennen also 6 x 8 = 48 virtuelle Antennen bei nur vierzehn (2 x (3+4)) physikalischen Einzelantennen.

Damit das Signal einer Sendeantenne eines Radartransceiverchips mit einer Empfangsantenne eines anderen Radartransceiverchips empfangen werden kann ist es jedoch notwendig eine Trägerfrequenz (beispielsweise 60 GHz) zwischen den beiden Radartransceiverchips zu synchronisieren. Das ist sehr aufwändig, da hier eine sehr hohe Frequenz über eine Leitung zwischen beiden Radartransceiverchips übertragen werden muss. Hierzu wäre eine aufwändige Hochfrequenzsynchronisationsleitung zwischen den Radartransceiverchips notwendig.

Außerdem ist der Hardware- bzw. Elektronikaufwand für so ein System sehr hoch da Antennen für diese hohen Frequenzen auf teurem speziellem Hochfrequenzmaterial sehr genau dimensioniert, entwickelt und später gefertigt werden müssen.

Die DE 10 2021 207 201 A1 offenbart ein Radarsystem für Kraftfahrzeuge, mit mehreren Sende/Empfangseinheiten, die auf getrennten Einbauträgern für den Einbau an verschiedenen Stellen im Kraftfahrzeug angeordnet sind, einem Auswertungssystem zur Auswertung der auf mehreren Kanälen empfangen Radarsignale in mehreren Verarbeitungsstufen, wobei eine erste Verarbeitungsstufe für jeden Kanal ein digitales Zeitsignal liefert, das das empfangene Radarsignal repräsentiert, und eine letzte Verarbeitungsstufe als Ergebnis Ortungsdaten einzelner Radarobjekte liefert und wobei zumindest die letzte Verarbeitungsstufe für die mehreren Sende/Empfangseinheiten in einer zentralen Auswertungsinstanz implementiert ist, mit der die Sende/Empfangseinheiten jeweils über eine Rohdatenschnittstelle kommunizieren, wobei die Rohdatenschnittstellen jeweils einen Serialisierer aufweisen, der dazu konfiguriert ist, Rohdaten der mehreren Kanäle der betreffenden Sende/Empfangseinheit seriell an die zentrale Auswertungsinstanz zu übermitteln.

Die DE 10 2015 218 542 A1 offenbart einen integrierten Hochfrequenzschaltkreis für einen Radarsensor, mit einem Takteingang, welcher ausgebildet ist, ein extern zu dem integrierten Hochfrequenzschaltkreis erzeugtes Taktsignal aufzunehmen, mit einem lokalen Oszillator, welcher ausgebildet ist, ein lokales Hochfrequenzsignal zu erzeugen, mit einem Hochfrequenzeingang, welcher ausgebildet ist, ein extern zu dem integrierten Hochfrequenzschaltkreis erzeugtes externes Hochfrequenzsignal aufzunehmen, und mit einem Umschalter, welcher mit dem lokalen Oszillator und mit dem Hochfrequenzeingang gekoppelt ist, und ausgebildet ist, für die Erzeugung eines Radarsignals zwischen dem lokalen Hochfrequenzsignal und dem externen Hochfrequenzsignal umzuschalten.

Die US 2016/0018511 A1 offenbart ein kaskadiertes Radarsystem, das ein erstes Radar-Ein-Chip-System umfasst, das einen ersten Teil der Signalverarbeitung zur Objekterkennung an digitalen Schwebungssignalen ausführt, die von mehreren Empfangskanälen des Radar-SOC erzeugt werden, ein zweites Radar-SOC, das den ersten Teil der Signalverarbeitung zur Objekterkennung an digitalen Schwebungssignalen ausführt, die von mehreren Empfangskanälen im Radar-SOC erzeugt werden, und eine Verarbeitungseinheit, die mit dem ersten Radar-SOC und dem zweiten Radar-SOC verbunden ist, um Ergebnisse des ersten Teils der Signalverarbeitung von jedem Radar-SOC zu empfangen, wobei die Verarbeitungseinheit den verbleibenden Teil der Signalverarbeitung zur Objekterkennung unter Verwendung dieser Ergebnisse ausführt.

Das Datenblatt "IWR6843AOP Single-Chip 60- to 64-GHz mmWave Sensor Antennas-On-Package (AOP)" von Texas Instruments offenbart einen Single-Chip Radar Chip mit einem DSP für eine Radar-Signalverarbeitung.

Eine Aufgabe der Erfindung besteht darin einen verbesserten und preiswerteren Radarsensor bereitzustellen, der mehrere räumlich verteilte Sendeantennen und Empfangsantennen verwendet und die Phasenlage des empfangenen Echosignals an den räumlich verteilten Antennen vergleicht, um so auf den Winkel zu schließen.

Die Aufgabe wird gemäß Anspruch 1 gelöst durch einen Radarsensor mit mindestens einem ersten Radartransceiverhalbleiterchip und mindestens einem zweiten Radartransceiverhalbleiterchip, wobei der erste Radartransceiverhalbleiterchip mindestens zwei Sendeantennen und mindestens zwei Empfängerantennen aufweist, wobei der zweite Radartransceiverhalbleiterchip mindestens zwei Sendeantennen und mindestens zwei Empfängerantennen aufweist, wobei jeder Radartransceiverhalbleiterchip jeweils eine Trägerfrequenz aufweist, wobei der erste Radartransceiverhalbleiterchip und der zweite Radartransceiverhalbleiterchip eine gemeinsame Steuer und Auswerteeinheit aufweisen, wobei die Steuer- und Auswerteeinheit ausgebildet ist, die Sendeantennen und Empfängerantennen des ersten Radartransceiverhalbleiterchips anzusteuern und auszuwerten und die Steuer- und Auswerteeinheit ausgebildet ist, die Sendeantennen und Empfängerantennen des zweiten Radartransceiverhalbleiterchips anzusteuern und auszuwerten, wobei die Trägerfrequenzen zwischen den Radartransceiverhalbleiterchips nicht synchronisiert ist, wodurch der erste Radartransceiverhalbleiterchip und der zweite Radartransceiverhalbleiterchip keine gemeinsame Hochfrequenzbasis aufweisen.

Der Radartransceiverhalbleiterchip kann synonym auch als Radartransceiverhalbleiterbauteil bezeichnet werden.

Multiple Input Multiple Output (MIMO) Systeme, wonach mehreren Sendeantennen und mehreren Empfangsantennen vorgesehen sind, sind gemäß der Erfindung deshalb vorteilhaft, weil jede Sendeantenne mit jeder Empfangsantenne zu einer virtuellen Antenne kombiniert werden kann.

Beispielsweise weist der Radartransceiverhalbleiterchip zwei, drei, vier, fünf, sechs sieben oder mehr Sendeantennen auf. Beispielsweise weist der Radartransceiverhalbleiterchip zwei, drei, vier, fünf, sechs sieben oder mehr Empfangsantennen auf. Dabei kann die Anzahl der Sendeantennen und die Anzahl der Empfangsantennen unterschiedlich sein.

Beispielsweise hat der Radartransceiverhalbleiterchip drei Sendeantennen und vier Empfangsantennen - also insgesamt sieben physikalische Antennen. Die Kombination jeder Sendeantenne mit jeder Empfangsantenne, also drei mal vier ergibt somit zwölf virtuelle Antennen, die genauso ausgewertet werden können wie zwölf physikalisch vorhandene Antennen. So wird Hardware-Aufwand bzw. Elektronikaufwand für Sendeantennen und Empfangsantennen und außerdem Baugröße gespart.

Beispielsweise gibt es einen für die Erfindung geeigneten Radartransceiverhalbleiterchip IWR6843AOP von Texas Instruments für z. B 60GHz, wobei die Antennen bereits auf dem Chip-Package angeordnet sind mit beispielsweise drei Sendeantennen und vier Empfangsantennen. Der große Vorteil ist, dass kein Hochfrequenzdesign auf einer Leiterplatte und keine eigene Antennenentwicklung benötigt wird.

Gemäß der Erfindung werden mindestens drei solcher oder ähnlicher Radartransceiverhalbleiterchip kombiniert, ohne diese zu synchronisieren.

Ohne die Synchronisierung entfällt zwar die Möglichkeit, dass das Signal einer Sendeantenne des einen Radartransceiverhalbleiterchips mit einer Empfangsantenne des anderen Radartransceiverhalbleiterchip zu empfangen. Trotzdem können die Empfangssignale aller Antennen kohärent durch die Steuer- und Auswerteeinheit miteinander verarbeitet werden. Dieser Punkt ist wesentlich für die vorliegende Erfindung. Es wären mit zwei Radartransceiverhalbleiterchips damit beispielsweise acht virtuelle Kanäle möglich bei jeweils zwei Sendeantennen und zwei Empfangsantennen pro Radartransceiverhalbleiterchip (2 Sendeantennen x 2 Empfangsantennen x 2 Radartransceiverhalbleiterchips) oder beispielsweise vierundzwanzig virtuelle Kanäle bei drei Sendeantennen und vier Empfangsantennen pro Radartransceiverhalbleiterchip (3 Sendeantennen x 4 Empfangsantennen x 2 Radartransceiverhalbleiterchips).

Das sind weniger als die 16 (4 Sendeantennen x 4 Empfangsantennen) bzw. 48 (6 Sendeantennen x 8 Empfangsantenne) mögliche virtuelle Antennen aus allen Kombinationen bei zwei Radartransceiverhalbleiterchip, aber dafür erreichbar ohne jegliches Hochfrequenzdesign zwischen den Radartransceiverhalbleiterchips. Dadurch wird Entwicklungsaufwand gespart, das System ist sehr einfach gehalten und die Herstellkosten werden begrenzt und gleichzeitig für einen Radarsensor mehr relativ hohe Winkelauflösung ermöglicht.

Eine aufwändige hochfrequenztaugliche Synchronisierungsleitung entfällt somit zwischen den Radartransceiverhalbleiterchips. Eine solche Synchronisierungsleitung wäre im zweistelligen GHz Bereich aufwändig und teuer, insbesondere wenn Radartransceiverhalbleiterchips verwendet werden, welche die Antennen bereits auf dem Halbleiter-Chip integriert haben. Denn dann würde nur für die Synchronisierung der Radartransceiverhalbleiterchips eine Hochfrequenzsynchronisierungsleitung notwendig werden.

Gemäß der Erfindung erfolgt keine Synchronisation zwischen den Radartransceiverhalbleiterchips. Damit ist es zwar nicht möglich die Sender des einen Radartransceiverhalbleiterchips mit den Empfängern des anderen Radartransceiverhalbleiterchips zu kombinieren. Es entstehen dann im Unterschied zu oben bei z.B. zwei Radartransceiverhalbleiterchips mit jeweils beispielsweise drei Sendeantennen und vier Empfangsantennen (3 Sendeantennen x 4 Empfängerantennen) + (3 Sendeantennen x 4 Empfängerantennen) = 24 Empfangssignale bzw. 24 kombinierte Antennen.

Auch wenn diese vierundzwanzig kombinierten Antennen bzw. Empfangssignale nicht dieselbe HF-Basis haben können diese aber trotzdem in ihrer Phasenlage miteinander verglichen werden, um somit aus einem virtuellen Array von 24 Elementen im Winkel aufzulösen. Beispielsweise über eine angewandte Fast Fourier Transformation (FFT) über alle beispielsweise vierundzwanzig kombinierte Antennen bzw. Empfangssignale.

Gemäß der Erfindung ist der Radarsensor bei der Entwicklung einfach skalierbar. Beispielsweise werden nicht nur zwei Radartransceiverhalbleiterchips verwendet, sondern prinzipiell so viele wie notwendig sind, also auch einer Mehrzahl oder eine Vielzahl von Radartransceiverhalbleiterchips die kombiniert werden.

Somit wird eine relativ hohe Winkelauflösung des Radarsensors erreicht, bei wenig Entwicklungsaufwand, wesentlich geringeren Herstellkosten und kleiner Baugröße.

Beispielsweise ist die räumliche Positionierung der Radartransceiverhalbleiterchips zueinander wichtig. Die Anordnung und Positionierung der Radartransceiverhalbleiterchips bzw. der Sendeantennen und Empfangsantennen auf dem Radartransceiverhalbleiterchips entscheidet darüber, wie viel Winkelauflösung in horizontaler und vertikaler Richtung erreicht wird.

Beispielsweise ist ein Radarsensor mit mehreren Sendeantennen und mehreren Empfangsantennen vorgesehen. Für jede Kombination aus Sendeantenne und Empfangsantenne wird ein Empfangssignal erhalten. Gemäß dem folgenden Beispiel ergeben 3 Sendeantennen und 4 Empfangsantennen 12 Empfangssignale:
Sendeantenne eins sendet, Empfangsantenne eins empfängt: Empfangssignal eins,
Sendeantenne eins sendet Empfangsantenne zwei empfängt: Empfangssignal zwei,
Sendeantenne eins sendet Empfangsantenne drei empfängt: Empfangssignal drei,
Sendeantenne eins sendet Empfangsantenne vier empfängt: Empfangssignal vier,
Sendeantenne zwei sendet Empfangsantenne eins empfängt: Empfangssignal fünf,
Sendeantenne zwei sendet Empfangsantenne zwei empfängt: Empfangssignal sechs,
Sendeantenne zwei sendet Empfangsantenne drei empfängt: Empfangssignal sieben,
Sendeantenne zwei sendet Empfangsantenne vier empfängt: Empfangssignal acht,
Sendeantenne drei sendet Empfangsantenne eins empfängt: Empfangssignal neun,
Sendeantenne drei sendet Empfangsantenne zwei empfängt: Empfangssignal zehn,
Sendeantenne drei sendet Empfangsantenne drei empfängt: Empfangssignal elf,
Sendeantenne drei sendet Empfangsantenne vier empfängt: Empfangssignal zwölf.

Wenn die Sendeantennen und Empfangsantennen flächig angeordnet sind entsteht mit den zwölf Empfangssignalen ein virtuelles Array das in allen Eigenschaften genau einem 'Phased Array' mit einer einzigen Sendeantenne und zwölf Empfangsantennen entspricht. Dementsprechend können die Signale genauso ausgewertet werden wie in einem klassischen 'Phased Array'. Bei einem 'Phased Array' wird die Phasenlage der Signale zueinander verglichen, um so auf den Winkel zu schließen zu können. Zum Beispiel mit einer Fast Fourier Transformation (FFT) über alle Empfangssignale.

Eine Phased-Array-Antenne (von englisch phased array, phasengesteuertes Feld) ist eine phasengesteuerte Gruppenantenne mit starker Richtwirkung, die eine Bündelung der Strahlungsenergie durch die Anordnung und Verschaltung von Einzelstrahlern erreicht. Wenn sich die Einzelstrahler unterschiedlich ansteuern lassen, ist das Antennendiagramm der Antenne elektronisch schwenkbar (elektronische Strahlschwenkung).

Das durch den Radarsensor bzw. Radargerät empfangene Signal ist im Grunde eine zeitliche Folge von Impulsen, deren Amplitude und Phase gemessen werden kann. Die Dopplerfrequenz- Verarbeitung basiert zusätzlich auf eine Messung des Anteils des Frequenzspektrums des empfangenen Signals. Der Frequenzanteil des zeitbezogenen Signals wird durch die Fouriertransformation ermittelt.

Die Fouriertransformation ist zu einem fundamentalen Verfahren in der Signalverarbeitung geworden, da bei einem Radarecho eine Vielzahl von Informationen in der Signalform enthalten sind. Diese Informationen werden durch die Fouriertransformation in ein Datenformat überführt, welches durch die rechnergestützte Weiterverarbeitung in der Steuer- und Auswerteeinheit genutzt werden kann.

Eine Fast Fourier Transformation ist ein Algorithmus, mit dem die Diskrete Fourier Transformation schneller und effizienter durchgeführt werden kann. Dieses wird erreicht durch:
- die Wahl eines ausreichend geeigneten mathematischen Algorithmus
- die Vermeidung von Multiplikationen (diese dauern im Computer sehr viel länger als Additionen)
- die softwaretechnische Möglichkeit in der Steuer- und Auswerteeinheit, schon während der Berechnung die ersten Werte als Annäherung bereits zur Verfügung stellen zu können.

Durch diese Maßnahmen benötigt eine Fast Fourier Transformation (abhängig von der Anzahl der Abtastungen) oft weniger als ein Hundertstel der Rechenzeit einer Diskreten Fourier Transformation. Mit der Fast Fourier Analyse können bei der automatischen Objekterkennung ganze Signalformen von Radarechos als nur wenige Daten gespeichert werden.

Die Fourier-Transformation ist eine Form der Analyse, die eine Funktion in Sinus- und Cosinus-Bestandteile (Basisfunktionen) zerlegt, das heißt in eine Summe von Sinus- oder Cosinusfunktionen verschiedener Frequenz, Phase und Amplitude. Zur Unterscheidung von der Fast Fourier Transformation (FFT) wird diese Analyse Diskrete Fourier Transformation (DFT) genannt.

Um das Echosignal zu dem von einer Sendeantenne ausgesendete Signal mit einer beliebigen Empfangsantenne empfangen zu können müssen Sendeantenne und Empfängerantenne HF-mäßig synchron sein. Beim Pulsradar brauchen sie denselben Lokaloszillator beim FMCW Radar muss am Empfänger das momentane Sendesignal vorliegen.

Bei Verwendung von nur einem einzigen Radartransceiverhalbleiterchips erfolgt die Synchronisierung intern auf dem Radartransceiverhalbleiterchips. Wenn man die Anzahl der Sender und Empfänger nun weiter erhöhen will kommt man irgendwann an die Grenze, dass ein einzelner Chip nie beliebig viele Sender und Empfänger bereitstellt. Gemäß der Erfindung werden dann zwei oder mehr Radartransceiverhalbleiterchips verwendet, um das virtuelle Array weiter zu vergrößern und die Winkelauflösung zu erhöhen.

In Weiterbildung der Erfindung sind der erste Radartransceiverhalbleiterchip und der zweite Radartransceiverhalbleiterchip kaskadiert und die Steuer- und Auswerteeinheit in mindestens einem Radartransceiverhalbleiterchip intergiert.

Wenn die Radartransceiverhalbleiterchips gemäß der Weiterbildung die Signalverarbeitung, also die Steuer- und Auswerteeinheit beinhalten (z. B einen Digitalen Signalprozessor (DSP) zusätzlich zu den analogen Sende- und Empfangsstrukturen) rechnet jeder Radartransceiverhalbleiterchips für sich selbst die Signalverarbeitung als wäre er alleine, bis auf die Winkelauswertung. In einem FMCW (frequency modulated continous wave radar) System wäre das grundsätzlich eine Range-Fast-Fourier-Transformation und eine Doppler-Fast-Fourier-Transformation und anschließend eine Constant-false-alarm-rate (CFAR) Detektion (Peaks im Signal vom Rauschen trennen). Dann ergibt sich in jedem Radartransceiverhalbleiterchip eine Liste von Targets bzw. detektierten Objekten mit Entfernung und Radialgeschwindigkeit (Dopplerfrequenz) und einer komplexen Amplitude.

Einer der Radartransceiverhalbleiterchip ist nun beispielsweise der Master und sammelt (z. B. über eine Serial-Peripheral-Interface (SPI) Schnittstelle) die Objektlisten bzw. Targetlisten aller anderen Radartransceiverhalbleiterchip ein. Für jedes Objekt das von allen Radartransceiverhalbleiterchips detektiert wurde (selbe Entfernung und Radialgeschwindigkeit) wird dann eine Fast-Fourier-Transformation über alle komplexen Amplituden gerechnet (eine Fast-Fourier-Transformation) über beispielsweise 24 komplexe Empfangssignale). Daraus ergibt sich ein finaler hochaufgelöster Winkel zu dem detektierten Objekt.

Die Verschaltung zwischen den Radartransceiverhalbleiterchips ist nur eine Kommunikationsschnittstelle zum Datenaustausch. Es ist keine sonstige Verschaltung zwischen den Radartransceiverhalbleiterchips nötig.

In Weiterbildung der Erfindung sind der erste Radartransceiverhalbleiterchip und der zweite Radartransceiverhalbleiterchip an die gemeinsame Steuer und Auswerteeinheit angeschlossen.

Gemäß der alternativen Weiterbildung ist die Steuer- und Auswerteeinheit bzw. die Signalverarbeitung außerhalb der einzelnen Radartransceiverhalbleiterchip zentral in der Steuer- und Auswerteeinheit angeordnet. Beispielsweise ist die Steuer- und Auswerteeinheit ein Digitaler Signal Prozessor. Beispielsweise wird eine Constant-false-alarm-rate (CFAR) Detektion erst nach der Winkel-Fast-Fourier-Transformation durchgeführt. Dadurch würde man mit der letzten Fast-Fourier-Transformation nochmal den Faktor der Länge der Fast-Fourier-Transformation (z. B Faktor 24) an Signal-zu-Rauschverhältnis gewinnen und damit mehr Reichweite bzw. Empfindlichkeit auf kleine Objekte erhalten.

Gemäß der Erfindung sind die Radartransceiverhalbleiterchips elektronisch in Serie geschaltet.

Einer der Radartransceiverhalbleiterchip ist dabei der Master und sammelt (z. B. über eine Serial-Peripheral-Interface (SPI) Schnittstelle) die Objektlisten bzw. Targetlisten aller anderen Radartransceiverhalbleiterchip ein.

Die Verschaltung zwischen den Radartransceiverhalbleiterchips ist nur eine Kommunikationsschnittstelle zum Datenaustausch. Es ist keine sonstige Verschaltung zwischen den Radartransceiverhalbleiterchips nötig.

In Weiterbildung der Erfindung ist die Steuer- und Auswerteeinheit ausgebildet ist die Sendeantenne und Empfängerantenne für eine Winkelauswertung auszuwerten.

Eine Auswertung erfolgt wie oben beschrieben entweder zunächst in jedem Radartransceiverhalbleiterchip einzeln und nach Range-Fast-Fourier-Transformation, Doppler-Fast-Fourier-Transformation und Constant-false-alarm-rate (CFAR) Detektion erfolgt ein zusammenfassen aller Ergebnisse durch die Steuer- und Auswerteeinheit und eine Übertragung über z. B. eine Serial-Peripheral-Interface (SPI) Schnittstelle in eine Steuer- und Auswerteeinheit als Master-Radartransceiverhalbleiterchip in dem dann über alle Objekte die Winkel-Fast-Fourier-Transformation gerechnet wird. Oder alle Radartransceiverhalbleiterchip rechnen zentral und dann erfolgt die Detektion erst nach allen Fast-Fourier-Transformationen (Range-Dopper-Winkel).

Gemäß der Erfindung sind mindestens drei Radartransceiverhalbleiterchips angeordnet, wobei die Radartransceiverhalbleiterchips geometrisch flächig in einer Ebene angeordnet sind.

Beispielsweise können auch vier oder mehr Radartransceiverhalbleiterchips angeordnet werden. Je mehr Antennen, bzw. je größer das Antennensystem ist desto mehr Winkelauflösung wird erreicht. Das ist immer der Vorteil, da die Winkelauflösung verbessert wird. Eine Aufteilung auf Winkelauflösung in horizontaler und/oder vertikaler Richtung ist mit verschiedenen geometrischen Anordnungen möglich.

Gemäß der Erfindung sind die drei Radartransceiverhalbleiterchips geometrisch matrixfömig in horizontaler und vertikaler Richtung angeordnet.

Beispielsweise können auch vier oder mehr Radartransceiverhalbleiterchips angeordnet werden. Je mehr Antennen, bzw. je größer das Antennensystem ist desto mehr Winkelauflösung wird erreicht. Das ist immer der Vorteil, da die Winkelauflösung verbessert wird. Eine Aufteilung auf Winkelauflösung in horizontaler und/oder vertikaler Richtung ist mit verschiedenen geometrischen Anordnungen möglich.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

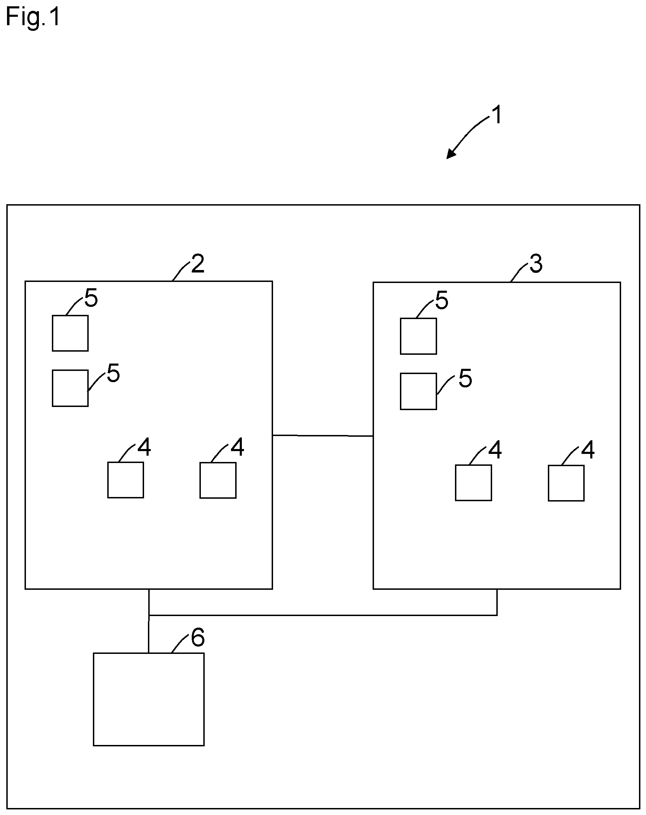

- Figur 1 bis Figur 5: jeweils ein Radarsensor.

In den nachfolgenden Figuren sind identische Teile mit identischen Bezugszeichen versehen.

Figur 1 zeigt einen Radarsensor 1 außerhalb des Schutzumfangs der beanspruchten Erfindung mit mindestens einem ersten Radartransceiverhalbleiterchip 2 und mindestens einem zweiten Radartransceiverhalbleiterchip 3, wobei der erste Radartransceiverhalbleiterchip 2 mindestens zwei Sendeantennen 4 und mindestens zwei Empfängerantennen 5 aufweist, wobei der zweite Radartransceiverhalbleiterchip 2 mindestens zwei Sendeantennen 4 und mindestens zwei Empfängerantennen 5 aufweist, wobei jeder Radartransceiverhalbleiterchip 2 jeweils eine Trägerfrequenz aufweist, wobei der erste Radartransceiverhalbleiterchip 2 und der zweite Radartransceiverhalbleiterchip 3 eine gemeinsame Steuer und Auswerteeinheit 6 aufweisen, wobei die Steuer- und Auswerteeinheit 6 ausgebildet ist, die Sendeantennen 4 und Empfängerantennen 5 des ersten Radartransceiverhalbleiterchips 2 anzusteuern und auszuwerten und die Steuer- und Auswerteeinheit 6 ausgebildet ist, die Sendeantennen 4 und Empfängerantennen 5 des zweiten Radartransceiverhalbleiterchips 3 anzusteuern und auszuwerten, wobei die Trägerfrequenzen zwischen den Radartransceiverhalbleiterchips 2, 3 nicht synchronisiert ist, wodurch der erste Radartransceiverhalbleiterchip 2 und der zweite Radartransceiverhalbleiterchip 3 keine gemeinsame Hochfrequenzbasis aufweisen.

Beispielsweise weist der Radartransceiverhalbleiterchip 2, 3 zwei, drei, vier, fünf, sechs sieben oder mehr Sendeantennen 4 auf. Beispielsweise weist der Radartransceiverhalbleiterchip 2, 3 zwei, drei, vier, fünf, sechs sieben oder mehr Empfangsantennen 5 auf. Dabei kann die Anzahl der Sendeantennen 4 und die Anzahl der Empfangsantennen 5 unterschiedlich sein.

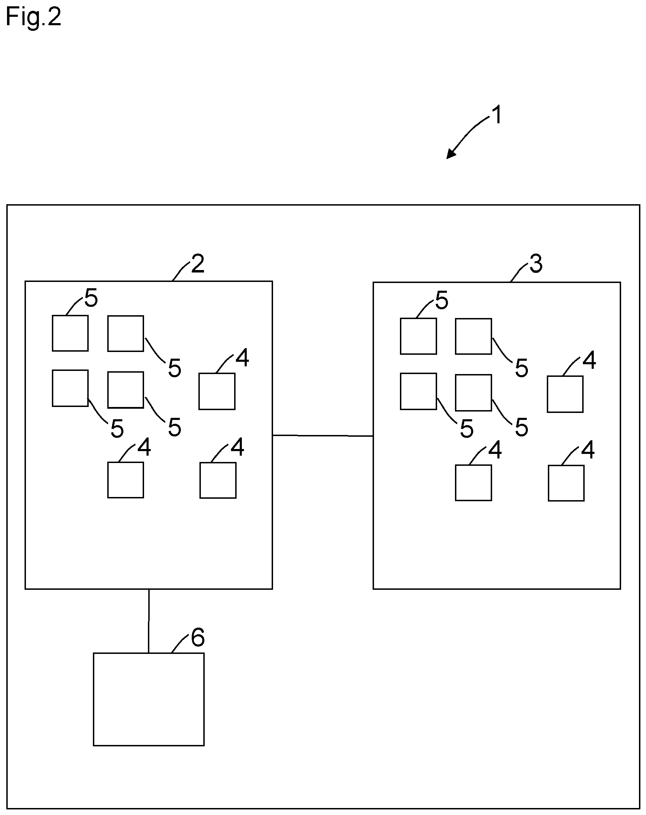

Gemäß Figur 2, die eine Ausführungsform außerhalb des Schutzumfangs der beanspruchten Erfindung zeigt, weist der Radartransceiverhalbleiterchip 2, 3 drei Sendeantennen 4 und vier Empfangsantennen 5 auf - also insgesamt sieben physikalische Antennen. Die Kombination jeder Sendeantenne 4 mit jeder Empfangsantenne 5, also drei mal vier ergibt somit zwölf virtuelle Antennen, die genauso ausgewertet werden können wie zwölf physikalisch vorhandene Antennen.

Beispielsweise gibt es einen für die Erfindung geeigneten Radartransceiverhalbleiterchip IWR6843AOP von Texas Instruments für z. B 60GHz, wobei die Antennen bereits auf dem Halbleiter-Chip-Package angeordnet sind mit beispielsweise drei Sendeantennen 4 und vier Empfangsantennen 5.

Gemäß Figur 1 oder Figur 2 sind mindestens zwei solcher oder ähnlicher Radartransceiverhalbleiterchips 2, 3 kombiniert, ohne diese zu synchronisieren.

Ohne die Synchronisierung entfällt zwar die Möglichkeit, dass das Signal einer Sendeantenne 4 des einen Radartransceiverhalbleiterchips 2 mit einer Empfangsantenne 5 des anderen Radartransceiverhalbleiterchip 3 zu empfangen. Trotzdem können die Empfangssignale aller Antennen 4, 5 kohärent durch die Steuer- und Auswerteeinheit 6 miteinander verarbeitet werden. Es wären mit zwei Radartransceiverhalbleiterchips 2, 3 damit beispielsweise acht virtuelle Kanäle möglich bei jeweils zwei Sendeantennen 4 und zwei Empfangsantennen 5 pro Radartransceiverhalbleiterchip 2, 3. Also zwei Sendeantennen 4 mal zwei Empfangsantennen 5 mal zwei Radartransceiverhalbleiterchips 2, 3 oder beispielsweise vierundzwanzig virtuelle Kanäle bei drei Sendeantennen 4 und vier Empfangsantennen 5 pro Radartransceiverhalbleiterchip 2, 3. Also drei Sendeantennen 4 mal vier Empfangsantennen 5 mal zwei Radartransceiverhalbleiterchips 2, 3.

Eine aufwändige hochfrequenztaugliche Synchronisierungsleitung entfällt somit zwischen den Radartransceiverhalbleiterchips 2, 3. Es erfolgt somit keine Synchronisation zwischen den Radartransceiverhalbleiterchips 2, 3. Damit ist es zwar nicht möglich die Senderantennen 4 des einen Radartransceiverhalbleiterchips 2 mit den Empfängerantennen 5 des anderen Radartransceiverhalbleiterchips 3 zu kombinieren. Es entstehen dann im Unterschied zu oben bei z.B. zwei Radartransceiverhalbleiterchips 2, 3 mit jeweils beispielsweise drei Sendeantennen 4 und vier Empfangsantennen 5 (drei Sendeantennen 4 mal vier Empfängerantennen 5) plus (drei Sendeantennen 4 mal vier Empfängerantennen 5) = vierundzwanzig Empfangssignale bzw. vierundzwanzig kombinierte Antennen.

Auch wenn diese vierundzwanzig kombinierten Antennen bzw. Empfangssignale nicht dieselbe HF-Basis haben können diese aber trotzdem in ihrer Phasenlage miteinander verglichen werden, um somit aus einem virtuellen Array von vierundzwanzig Elementen im Winkel aufzulösen. Beispielsweise über eine angewandte Fast Fourier Transformation (FFT) über alle beispielsweise vierundzwanzig kombinierte Antennen bzw. Empfangssignale.

Beispielsweise ist ein Radarsensor 1 mit mehreren Sendeantennen 4 und mehreren Empfangsantennen 5 vorgesehen. Für jede Kombination aus Sendeantenne 4 und Empfangsantenne 5 wird ein Empfangssignal erhalten. Gemäß dem folgenden Beispiel ergeben drei Sendeantennen 4 und vier Empfangsantennen 5 zwölf Empfangssignale. Wenn die Sendeantennen 4 und Empfangsantennen 5 flächig angeordnet sind entsteht mit den zwölf Empfangssignalen ein virtuelles Array das in allen Eigenschaften genau einem 'Phased Array' mit einer einzigen Sendeantenne 4 und zwölf Empfangsantennen 5 entspricht. Dementsprechend können die Signale genauso ausgewertet werden wie in einem klassischen 'Phased Array'. Bei einem 'Phased Array' wird die Phasenlage der Signale zueinander verglichen, um so auf den Winkel zu schließen zu können. Zum Beispiel mit einer Fast Fourier Transformation (FFT) über alle Empfangssignale.

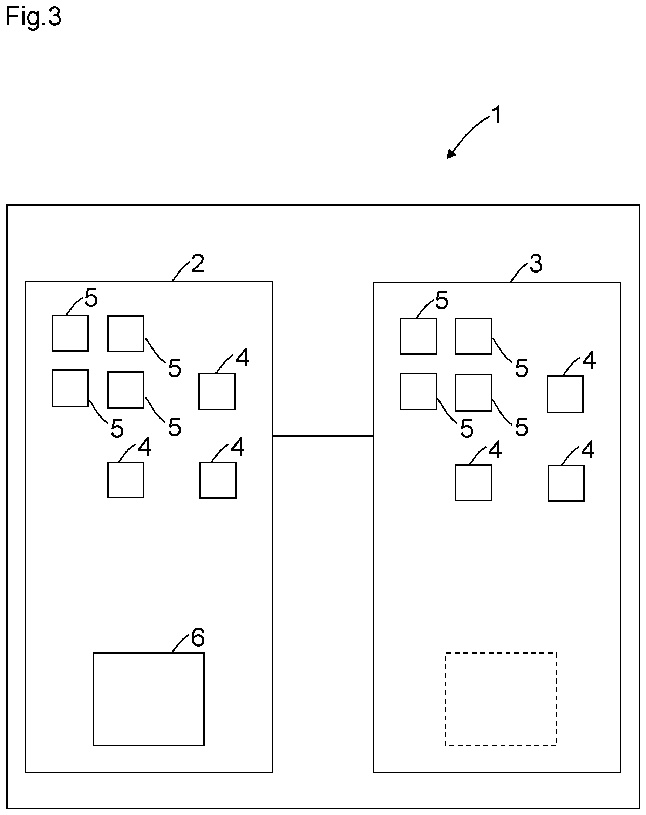

Gemäß Figur 3, die eine Ausführungsform außerhalb des Schutzumfangs der beanspruchten Erfindung zeigt, sind der erste Radartransceiverhalbleiterchip 2 und der zweite Radartransceiverhalbleiterchip 3 kaskadiert und die Steuer- und Auswerteeinheit 6 in mindestens einem Radartransceiverhalbleiterchip 2, 3 intergiert.

Wenn die Radartransceiverhalbleiterchips 2, 3 gemäß Figur 3 die Signalverarbeitung, also die Steuer- und Auswerteeinheit 6 beinhalten (z. B. einen Digitalen Signalprozessor (DSP) zusätzlich zu den analogen Sende- und Empfangsstrukturen) rechnet jeder Radartransceiverhalbleiterchips 2, 3 für sich selbst die Signalverarbeitung als wäre er alleine, bis auf die Winkelauswertung. In einem FMCW (frequency modulated continous wave radar) System wäre das grundsätzlich eine Range-Fast-Fourier-Transformation und eine Doppler-Fast-Fourier-Transformation und anschließend eine Constant-false-alarm-rate (CFAR) Detektion (Peaks im Signal vom Rauschen trennen). Dann ergibt sich in jedem Radartransceiverhalbleiterchip 2, 3 eine Liste von Targets bzw. detektierten Objekten mit Entfernung und Radialgeschwindigkeit (Dopplerfrequenz) und einer komplexen Amplitude.

Einer der Radartransceiverhalbleiterchip 2, 3 ist nun beispielsweise der Master und sammelt (z. B. über eine Serial-Peripheral-Interface (SPI) Schnittstelle) die Objektlisten bzw. Targetlisten aller anderen Radartransceiverhalbleiterchips 2, 3 ein. Für jedes Objekt, das von allen Radartransceiverhalbleiterchips 2, 3 detektiert wurde (selbe Entfernung und Radialgeschwindigkeit) wird dann eine Fast-Fourier-Transformation über alle komplexen Amplituden gerechnet (eine Fast-Fourier-Transformation) über beispielsweise 24 komplexe Empfangssignale). Daraus ergibt sich ein finaler hochaufgelöster Winkel zu dem detektierten Objekt.

Die Verschaltung zwischen den Radartransceiverhalbleiterchips 2, 3 ist nur eine Kommunikationsschnittstelle zum Datenaustausch. Es ist keine sonstige Verschaltung zwischen den Radartransceiverhalbleiterchips 2, 3 nötig.

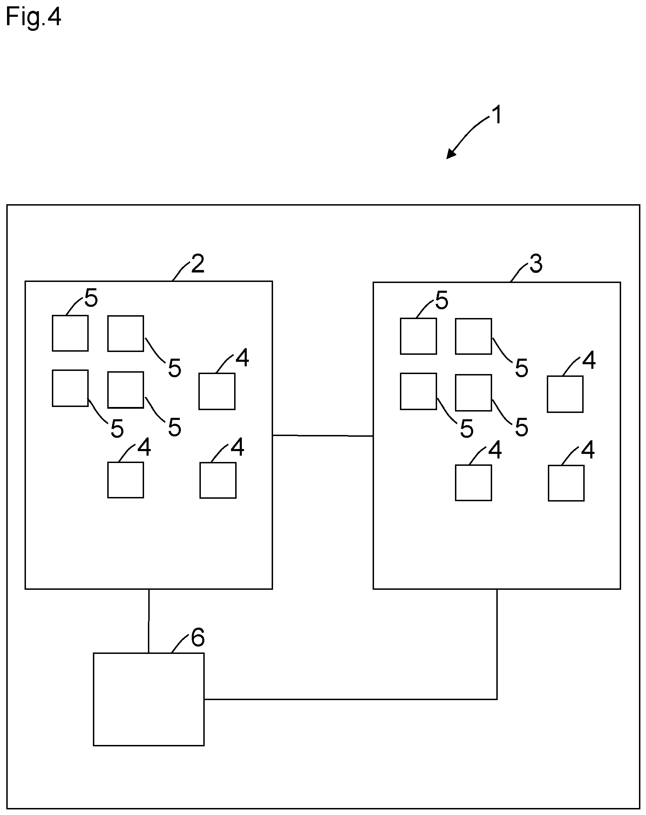

Gemäß Figur 4, die eine Ausführungsform außerhalb des Schutzumfangs der beanspruchten Erfindung zeigt, + sind der erste Radartransceiverhalbleiterchip 2 und der zweite Radartransceiverhalbleiterchip 3 an die gemeinsame Steuer und Auswerteeinheit 6 angeschlossen.

Gemäß der alternativen Weiterbildung ist die Steuer- und Auswerteeinheit 6 bzw. die Signalverarbeitung außerhalb der einzelnen Radartransceiverhalbleiterchips 2, 3 zentral in der Steuer- und Auswerteeinheit 6 angeordnet. Beispielsweise ist die Steuer- und Auswerteeinheit 6 ein Digitaler Signal Prozessor. Beispielsweise wird eine Constant-false-alarm-rate (CFAR) Detektion erst nach der Winkel-Fast-Fourier-Transformation durchgeführt. Dadurch würde man in der Steuer- und Auswerteeinheit 6 mit der letzten Fast-Fourier-Transformation nochmal den Faktor der Länge der Fast-Fourier-Transformation (z. B Faktor vierundzwanzig) an Signal-zu-Rauschverhältnis gewinnen und damit mehr Reichweite bzw. Empfindlichkeit auf kleine Objekte erhalten.

Beispielsweise sind die Radartransceiverhalbleiterchips 2, 3 elektronisch in Serie geschaltet.

Einer der Radartransceiverhalbleiterchips 2, 3 ist dabei der Master und sammelt (z. B. über eine Serial-Peripheral-Interface (SPI) Schnittstelle) die Objektlisten bzw. Targetlisten aller anderen Radartransceiverhalbleiterchips 2, 3 ein.

Die Verschaltung zwischen den Radartransceiverhalbleiterchips 2, 3 ist nur eine Kommunikationsschnittstelle zum Datenaustausch. Es ist keine sonstige Verschaltung zwischen den Radartransceiverhalbleiterchips 2, 3 nötig.

Beispielsweise ist die Steuer- und Auswerteeinheit 6 ausgebildet die Sendeantennen 4 und Empfängerantennen 5 für eine Winkelauswertung auszuwerten. Eine Auswertung erfolgt wie oben beschrieben entweder zunächst in jedem Radartransceiverhalbleiterchip 2, 3 einzeln und nach Range-Fast-Fourier-Transformation, Doppler-Fast-Fourier-Transformation und Constant-false-alarm-rate (CFAR) Detektion erfolgt ein zusammenfassen aller Ergebnisse durch die Steuer- und Auswerteeinheit 6 und eine Übertragung über z. B. eine Serial-Peripheral-Interface (SPI) Schnittstelle in eine Steuer- und Auswerteeinheit 6 als Master-Radartransceiverhalbleiterchip 2, 3 in dem dann über alle Objekte die Winkel-Fast-Fourier-Transformation gerechnet wird. Oder alle Radartransceiverhalbleiterchips 2, 3 rechnen zentral und dann erfolgt die Detektion erst nach allen Fast-Fourier-Transformationen (Range-Dopper-Winkel).

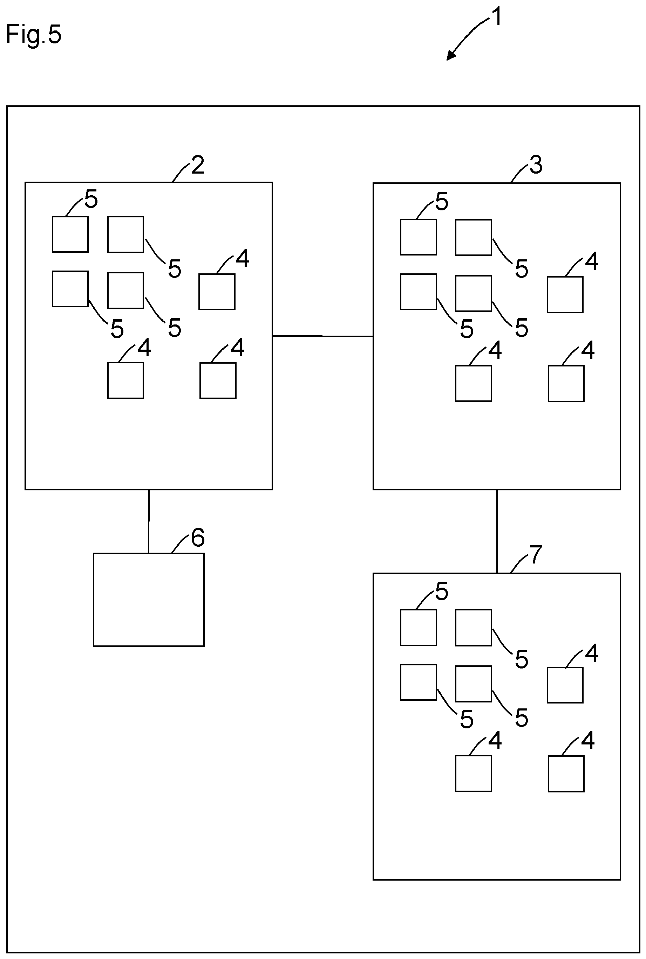

Erfindungsgemäß sind in Figur 5 mindestens drei Radartransceiverhalbleiterchips 2, 3, 7 angeordnet, wobei die Radartransceiverhalbleiterchips 2, 3, 7 geometrisch flächig in einer Ebene angeordnet sind.

Beispielsweise können auch vier oder mehr Radartransceiverhalbleiterchips, 2, 3, 7 angeordnet werden. Je mehr Antennen, bzw. je größer das Antennensystem ist desto mehr Winkelauflösung wird erreicht. Das ist immer ein Vorteil, da die Winkelauflösung verbessert wird. Eine Aufteilung auf Winkelauflösung in horizontaler und/oder vertikaler Richtung ist mit verschiedenen geometrischen Anordnungen möglich.

Erfindungsgemäß sind die drei Radartransceiverhalbleiterchips 2, 3, 7 geometrisch matrixfömig in horizontaler und vertikaler Richtung angeordnet.

### Bezugszeichen:

1 Radarsensor
2 erster Radartransceiverhalbleiterchip
3 zweiter Radartransceiverhalbleiterchip
4 Sendeantenne
5 Empfängerantenne
6 Steuer- und Auswerteeinheit
7 Radartransceiverhalbleiterchip

## Patentansprüche

1. Radarsensor (1) mit mindestens einem ersten Radartransceiverhalbleiterchip (2) und mindestens einem zweiten Radartransceiverhalbleiterchip (3),
wobei der erste Radartransceiverhalbleiterchip (2) mindestens zwei Sendeantennen (4) und mindestens zwei Empfängerantennen (5) aufweist,
wobei der zweite Radartransceiverhalbleiterchip (2) mindestens zwei Sendeantennen (4) und mindestens zwei Empfängerantennen (5) aufweist,
wobei jeder Radartransceiverhalbleiterchip (2, 3) jeweils eine Trägerfrequenz aufweist,
wobei
der erste Radartransceiverhalbleiterchip (2) und der zweite Radartransceiverhalbleiterchip (3) eine gemeinsame Steuer und Auswerteeinheit (6) aufweisen,
wobei die Steuer- und Auswerteeinheit (6) ausgebildet ist, die Sendeantennen (4) und Empfängerantennen (5) des ersten Radartransceiverhalbleiterchips (2) anzusteuern und auszuwerten und
die Steuer- und Auswerteeinheit (6) ausgebildet ist, die Sendeantennen (4) und Empfängerantennen (5) des zweiten Radartransceiverhalbleiterchips (3) anzusteuern und auszuwerten,
wobei die Trägerfrequenzen zwischen den Radartransceiverhalbleiterchips (2, 3) nicht synchronisiert sind,
wodurch der erste Radartransceiverhalbleiterchip (2) und der zweite Radartransceiverhalbleiterchip (3) keine gemeinsame Hochfrequenzbasis aufweisen, wobei mindestens drei Radartransceiverhalbleiterchips (2, 3) angeordnet sind, wobei die Radartransceiverhalbleiterchips (2, 3) geometrisch flächig in einer Ebene angeordnet sind und **dadurch gekennzeichnet, dass** die Radartransceiverhalbleiterchips (2, 3) geometrisch matrixförmig in horizontaler und vertikaler Richtung angeordnet sind, wobei die Radartransceiverhalbleiterchips (2, 3) elektronisch in Serie geschaltet sind, wobei die Verschaltung zwischen den Radartransceiverhalbleiterchips (2, 3) nur eine Kommunikationsschnittstelle zum Datenaustausch ist und die Steuer- und Auswerteeinheit (6) ausgebildet ist die Sendeantennen (4) und Empfängerantennen (5) für eine Winkelauswertung auszuwerten.

2. Radarsensor (1) nach Anspruch 1, **dadurch gekennzeichnet, dass** der erste Radartransceiverhalbleiterchip (2) und der zweite Radartransceiverhalbleiterchip (3) kaskadiert sind und die Steuer- und Auswerteeinheit (6) in einem Radartransceiverhalbleiterchip (2, 3) intergiert ist.

3. Radarsensor (1) nach Anspruch 1, **dadurch gekennzeichnet, dass** der erste Radartransceiverhalbleiterchip (2) und der zweite Radartransceiverhalbleiterchip (3) an die gemeinsame Steuer und Auswerteeinheit (6) angeschlossen sind.

## Claims

1. A radar sensor (1) having at least one first radar transceiver semiconductor chip (2) and at least one second radar transceiver semiconductor chip (3), wherein the first radar transceiver semiconductor chip (2) has at least two transmission antennas (4) and at least two receiver antennas (5),
wherein the second radar transceiver semiconductor chip (2) has at least two transmission antennas (4) and at least two receiver antennas (5),
wherein every radar transceiver semiconductor chip (2, 3) respectively has a carrier frequency,
wherein
the first radar transceiver semiconductor chip (2) and the second radar transceiver semiconductor chip (3) have a common control and evaluation unit (6), wherein the control and evaluation unit (6) is configured to control and evaluate the transmission antennas (4) and the receiver antennas (5) of the first radar transceiver semiconductor chip (2), and
the control and evaluation unit (6) is configured to control and evaluate the transmission antennas (4) and receiver antennas (5) of the second radar transceiver semiconductor chip (3), and
wherein the carrier frequencies between the radar transceiver semiconductor chips (2, 3) are not synchronized,
whereby the first radar transceiver semiconductor chip (2) and the second radar transceiver semiconductor chip (3) do not have a common highfrequency base, wherein at least three radar transceiver semiconductor chips (2, 3) are arranged, wherein the radar transceiver semiconductor chips (2, 3) are arranged geometrically areally in a plane, and **characterized in that** the radar transceiver semiconductor chips (2, 3) are arranged geometrically in matrix form in the horizontal and vertical directions, wherein the radar transceiver semiconductor chips (2, 3) are electronically connected in series, wherein the interconnection between the radar transceiver semiconductor chips (2, 3) is only a communication interface for data exchange, and the control and evaluation unit (6) is configured to evaluate the transmission antennas (4) and receiver antennas (5) for an angular evaluation.

2. A radar sensor (1) in accordance with claim 1, **characterized in that** the first radar transceiver semiconductor chip (2) and the second radar transceiver semiconductor chip (3) are cascaded and the control and evaluation unit (6) is integrated in a radar transceiver semiconductor chip (2, 3).

3. A radar sensor (1) in accordance with claim 1, **characterized in that** the first radar transceiver semiconductor chip (2) and the second radar transceiver semiconductor chip (3) are connected to the common control and evaluation unit (6).

## Revendications

1. Capteur radar (1) comprenant au moins une première puce semi-conductrice d'émetteur-récepteur radar (2) et au moins une deuxième puce semi-conductrice d'émetteur-récepteur radar (3),
dans lequel la première puce semi-conductrice d'émetteur-récepteur radar (2) présente au moins deux antennes d'émission (4) et au moins deux antennes de réception (5),
dans lequel la deuxième puce semi-conductrice d'émetteur-récepteur radar (3) présente au moins deux antennes d'émission (4) et au moins deux antennes de réception (5),
dans lequel chaque puce semi-conductrice d'émetteur-récepteur radar (2, 3) présente une fréquence porteuse respective,
dans lequel la première puce semi-conductrice d'émetteur-récepteur radar (2) et la deuxième puce semi-conductrice d'émetteur-récepteur radar (3) présentent une unité commune de commande et d'évaluation (6),
l'unité de commande et d'évaluation (6) étant réalisée pour piloter et évaluer les antennes d'émission (4) et les antennes de réception (5) de la première puce semi-conductrice d'émetteur-récepteur radar (2), et
l'unité de commande et d'évaluation (6) est réalisée pour piloter et évaluer les antennes d'émission (4) et les antennes de réception (5) de la deuxième puce semi-conductrice d'émetteur-récepteur radar (3),
dans lequel les fréquences porteuses entre les puces semi-conductrices d'émetteur-récepteur radar (2, 3) ne sont pas synchronisées,
moyennant quoi la première puce semi-conductrice d'émetteur-récepteur radar (2) et la deuxième puce semi-conductrice d'émetteur-récepteur radar (3) ne présentent pas de base hautes fréquences commune,
dans lequel au moins trois puces semi-conductrices d'émetteur-récepteur radar (2, 3) sont agencées,
dans lequel les puces semi-conductrices d'émetteur-récepteur radar (2, 3) sont agencées géométriquement de manière plane dans un même plan, et
**caractérisé en ce que** les puces semi-conductrices d'émetteur-récepteur radar (2, 3) sont agencées géométriquement sous forme de matrice dans des directions horizontale et verticale, les puces semi-conductrices d'émetteur-récepteur radar (2, 3) étant montées électriquement en série, le câblage entre les puces semi-conductrices d'émetteur-récepteur radar (2, 3) constituant uniquement une interface de communication à des fins d'échange de données, et l'unité de commande et d'évaluation (6) étant réalisée pour évaluer les antennes d'émission (4) et les antennes de réception (5) pour une évaluation angulaire.

2. Capteur radar (1) selon la revendication 1, **caractérisé en ce que** la première puce semi-conductrice d'émetteur-récepteur radar (2) et la deuxième puce semi-conductrice d'émetteur-récepteur radar (3) sont montées en cascade et l'unité de commande et d'évaluation (6) est intégrée dans une puce semi-conductrice d'émetteur-récepteur radar (2, 3).

3. Capteur radar (1) selon la revendication 1, **caractérisé en ce que** la première puce semi-conductrice d'émetteur-récepteur radar (2) et la deuxième puce semi-conductrice d'émetteur-récepteur radar (3) sont raccordées à l'unité commune de commande et d'évaluation (6).
